# EUROPEAN PATENT APPLICATION

(11) **EP 4 132 217 A1**
(43) Date of publication of application: **08.02.2023**
(21) Application number: 20928983.4
(22) Date of filing: 31.03.2020
(51) Int. Cl.: H04W 88/02

(54) **TERMINAL**

(71) Applicant: NTT DOCOMO, INC., Chiyoda-Ku Tokyo 100-6150 (JP)
(72) Inventor: YOKOKAWA, Tomoki, Tokyo 100-6150 (JP); KAKISHIMA, Yuichi, Tokyo 100-6150 (JP); TAKADA, Takuma, Tokyo 100-6150 (JP)
(74) Representative: Hoffmann Eitle
(86) International application number: PCT/JP2020/014937
(87) International publication number: WO 2021/199346

(57) **Abstract**

A terminal including : a reception unit configured to receive configuration information of a time length for advancing a measurement gap from a base station apparatus; and a control unit configured to perform measurement, wherein the configuration information includes, as the time length for advancing the measurement gap, a time length selected from a plurality of time lengths including a predetermined time length shorter than 0.25ms, and wherein the control unit is configured to perform measurement in the measurement gap advanced by the time length included in the configuration information.

## Description

### [Technical Field]

The present invention relates to a terminal in a wireless communication system.

### [Background Art]

In NR (New Radio) (also referred to as "5G"), a successor system to the Long Term Evolution (LTE), technologies that satisfy requirements such as high capacity systems, high data transmission rate, low delay, simultaneous connection of multiple terminals, low cost, and power saving are being considered. In NR, use of high frequency bands such as 52.6-71 GHz or 24.25-71 GHz is being considered.

In addition, existing LTE systems support use of frequency bands (also called unlicensed band, unlicensed carrier, and unlicensed CC) different from licensed bands licensed to telecom operators in order to expand frequency bands. For example, 2.4-GHz band or 5-GHz band or 6-GHz band where Wi-Fi (registered trademark) or Bluetooth (registered trademark) can be used is assumed to be an unlicensed band. In NR, a system that supports the unlicensed band is called an NR-U system.

### [Prior art documents]

### [Non-patent document]

[Non-Patent Document 1] 3GPP TS 38. 331 V15. 8. 0(2019-12)
[Non-Patent Document 2] 3GPP TS 38. 133 V15. 8. 0(2019-12)
[Non-Patent Document 3] 3GPP TS 38. 215 V15. 6. 0(2019-12)

### [Summary of Invention]

### [Problem to be solved by the invention]

In NR, various functions and requirements are defined for measurement of RRM (Radio Resource Management) to secure mobility performance of user terminals and measurement of RLM (Radio Link Monitoring) to monitor quality of downlink (Non-Patent Documents 1 to 3).

However, a user terminal that conforms to existing NR specifications that assume frequencies up to 52.6 GHz may not be able to properly perform measurements in high frequency bands such as 52.6 to 71 GHz.

The present invention has been made in view of the foregoing points, and it is an object of the present invention to provide a technology that enables a user terminal to properly perform measurement in a high frequency band in a wireless communication system.

### [Means for Solving Problems]

According to the disclosed technique, there is provided a terminal including:
a reception unit configured to receive configuration information of a time length for advancing a measurement gap from a base station apparatus; and
a control unit configured to perform measurement,
wherein the configuration information includes, as the time length for advancing the measurement gap, a time length selected from a plurality of time lengths including a predetermined time length shorter than 0.25ms, and
wherein the control unit is configured to perform measurement in the measurement gap advanced by the time length included in the configuration information.

### [Effects of the Invention]

According to the disclosed technique, in a wireless communication system, a technique is provided that enables the user terminal to properly perform measurement in a high frequency band.

### [Brief Description of Drawings]

Fig. 1 is a diagram for explaining a wireless communication system according to an embodiment of the present invention;
Fig. 2 is a diagram for explaining a wireless communication system according to an embodiment of the present invention;
Fig. 3 is a diagram showing an example of bands;
Fig. 4 is a diagram for explaining a relationship between an SSC and a symbol/slot length;
Fig. 5 is a diagram for explaining a basic operation in a wireless communication system;
Fig. 6 is a diagram showing an example of SSB configuration;
Fig. 7 is a diagram showing an example of SMTC window and Gap configurations;
Fig. 8 is a diagram showing RF Returning Time;
Fig. 9 is a diagram for explaining a measure gap timing advance;
Fig. 10 is a diagram showing an example of Gap Pattern Configuration;
Fig. 11 is a diagram showing an example of Gap Pattern Configuration;
Fig. 12 is a diagram for explaining an interruption length;
Fig. 13 is a diagram for explaining an interruption length;
Fig. 14 is a diagram illustrating an example of the definition of Interruption Length;
Fig. 15 is a diagram illustrating an example of the definition of Interruption Length;
Fig. 16 is a diagram illustrating an example of the definition of Interruption Length;
Fig. 17 is a diagram for explaining Rx beam sweeping;
Fig. 18 is a diagram for explaining Scheduling availability;
Fig. 19 is a diagram showing an example of a functional configuration of a base station apparatus 10 according to an embodiment of the present invention;
Fig. 20 is a diagram showing an example of a functional configuration of a user terminal 20 according to an embodiment of the present invention;

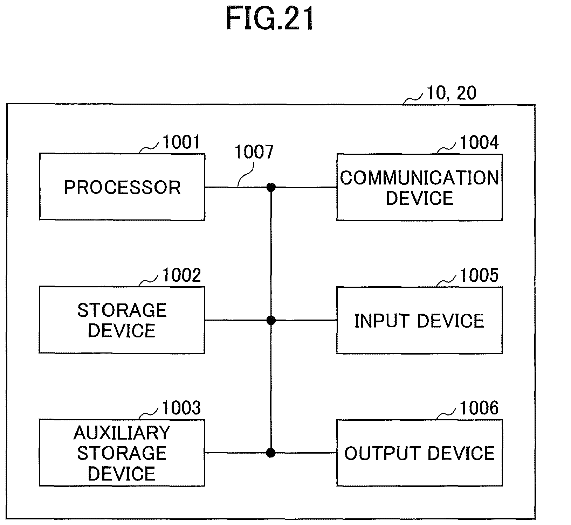

Fig. 21 is a diagram illustrating an example of the hardware configuration of the base station apparatus 10 or the user terminal 20 according to an embodiment of the present invention.

### [Mode for Carrying Out the Invention]

Hereinafter, embodiments of the present invention will be described with reference to the drawings. The embodiments described below are examples, and the embodiments to which the present invention is applied are not limited to the following embodiments.

In operating a wireless communication system according to an embodiment of the present invention, existing techniques are used as appropriate. The existing technology is, for example, an existing NR. The wireless communication system (the base station apparatus 10 and the user terminal 20) according to the present embodiment basically operates according to the existing specification (for example, Non-Patent Documents 1 to 3). However, in order to solve the problem in the case of using the high frequency band, the base station apparatus 10 and the user terminal 20 perform an operation that is not provided in the present specification. In the description of the embodiments which will be described later, operations not included in the existing provisions are mainly described. All the values described below are examples.

In embodiments of the present invention, the duplex method may be a TDD (Time Division Duplex) method, a FDD (Frequency Division Duplex) method, or any other method (e.g., Flexible Duplex, etc.).

In an embodiment of the present invention, a wireless parameter or the like being "configured" may mean that a predetermined value is pre-configured, or that a wireless parameter notified from the base station apparatus 10 or a user terminal 20 is configured.

### (System Configuration)

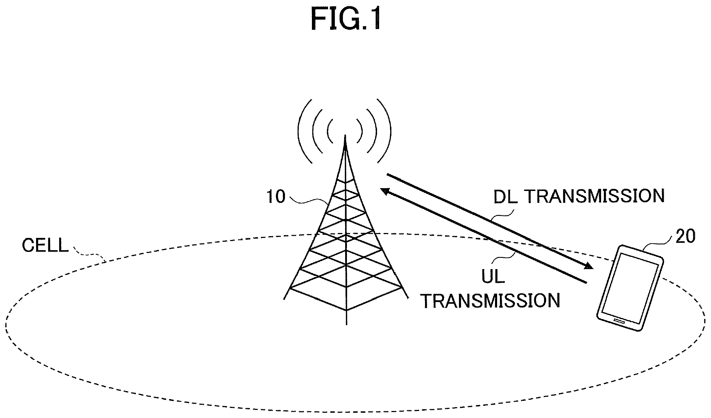

Fig. 1 is a diagram illustrating a wireless communication system according to an embodiment of the present invention. The wireless communication system in an embodiment of the present invention includes a base station apparatus 10 and a user terminal 20, as shown in FIG. 1. In FIG. 1, one base station apparatus 10 and one user terminal 20 are shown, but this is an example and a plurality of base station apparatuses 10 and a plurality of user terminals 20 may be provided. The user terminal 20 may be referred to as a "terminal."

The base station apparatus 10 is a communication device that provides one or more cells and performs wireless communication with the user terminal 20. The physical resources of the radio signal are defined in time and frequency domains.

OFDM is used as a radio access method. In the frequency domain, subcarrier spacing (SCS) such as 15 kHz, 30 kHz, 120 kHz, 240 kHz, etc. are supported. In addition, a resource block is constructed by a predetermined number of consecutive subcarriers (e.g., 12) regardless of SCS.

The user terminal 20 detects an SSB (SS/PBCH block) and identifies SCS in PDCCH and PDSCH based on PBCH included in the SSB when performing initial access.

In the time domain, slots are configured by a plurality of OFDM symbols (e.g., 14 regardless of subcarrier spacing). The OFDM symbol is hereinafter referred to as a "symbol". Slot is a scheduling unit. In addition, a subframe of 1 ms time length is defined, and a frame consisting of 10 subframes is defined. The number of symbols per slot is not limited to 14.

As shown in FIG. 1, the base station apparatus 10 transmits control information or data in DL (Downlink) to the user terminal 20 and receives control information or data in UL (Uplink) from the user terminal 20. Both the base station apparatus 10 and the user terminal 20 are capable of beam forming to transmit and receive signals. Also, both the base station apparatus 10 and the user terminal 20 can apply communication by MIMO (Multiple Input Multiple Output) to DL or UL. The base station apparatus 10 and the user terminal 20 may both perform communication by a CA (Carrier Aggregation) via a SCell (Secondary Cell) and a PCell (Primary Cell).

The user terminal 20 is a communication device having a wireless communication function such as a smartphone, a cellular phone, a tablet, a wearable terminal, a communication module for M2M (Machine-to-Machine), or the like. As shown in Fig. 1, the user terminal 20 utilizes various communication services provided by the wireless communication system by receiving control information or data in DL from the base station apparatus 10 and transmitting control information or data in UL to the base station apparatus 10.

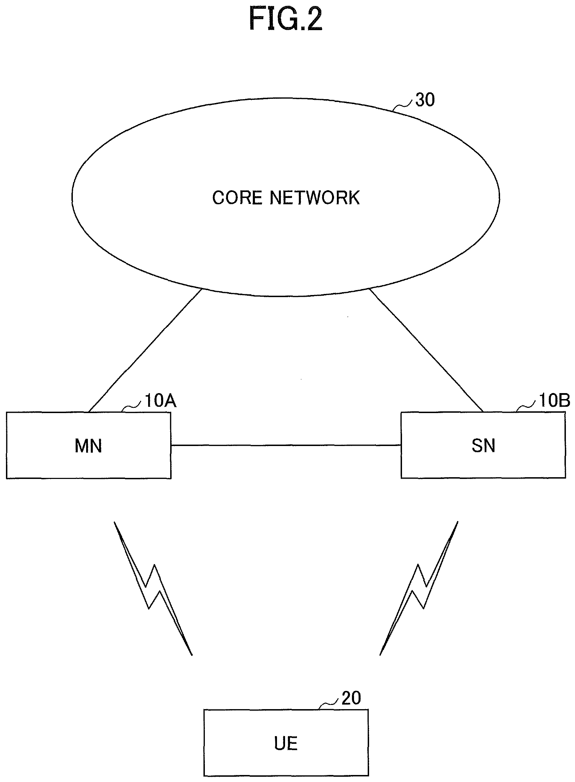

Fig. 2 shows an example of a configuration of a wireless communication system when DC (Dual connectivity) is performed. As shown in FIG. 2, a base station apparatus 10A serving as an MN (Master Node) and a base station apparatus 10B serving as an SN (Secondary Node) are provided. The base station apparatus 10A and the base station apparatus 10B are each connected to a core network. The user terminal 20 communicates with both the base station apparatus 10A and the base station apparatus 10B.

A cell group provided by the base station apparatus 10A that is an MN is called MCG (Master Cell Group), and a cell group provided by the base station apparatus 10B that is an SN is called SCG (Secondary Cell Group). The operation according to this embodiment may be performed in any one configuration of FIG. 1 and FIG. 2. The DC may also be NE-DC, EN-DC, or NR-DC.

In the wireless communication system according to this embodiment, when an unlicensed band is used, an LBT (Listen Before Talk) is executed. The base station apparatus 10 or the user terminal 20 performs transmission when an LBT result is idle, and does not perform transmission when the LBT result is busy.

### (Frequency band)

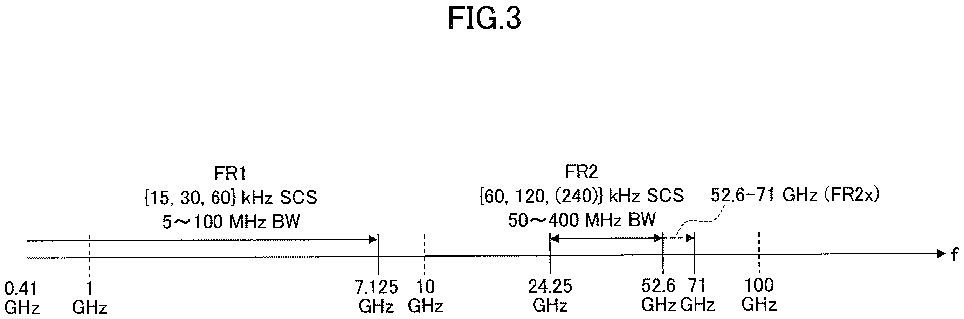

FIG. 3 illustrates an example of a frequency band used in an existing NR and an example of a frequency band used in a wireless communication system according to this embodiment. There are two frequency bands (also referred to as frequency ranges) in existing NR: FR1 (0.41 GHz to 7.125) and FR2 (24.25 GHz to 52.6 GHz). As shown in FIG. 3, FR1 supports 15 kHz, 30 kHz, and 60 kHz as SCS and 5-100 MHz as bandwidth (BW). FR2 supports 60 kHz, 120 kHz and 240 kHz (SSB only) as SCS and 50-400 MHz as bandwidth (BW).

The wireless communication system in accordance with the present embodiment also assumes that a frequency band of 52.6 GHz to 71 GHz, which is not used in the existing NR, is utilized. For convenience, in FIG. 3, the frequency band 52.6 GHz to 71 GHz is referred to as FR2x, which may be referred to as "FR3". Also, in this embodiment, the frequency band from 24.25 GHz to 71 GHz may be referred to as extended FR2. By way of example, 52.6 GHz to 71 GHz is referred to as FR3. The frequency band 24.25 GHz to 71 GHz may be referred to as FR3.

Also, in this embodiment, as the frequency band is expanded as described above, a wider SCS than an existing SCS is used. For example, in FR3, SCS of 480 kHz is used for SSB and SCS of 240 kHz is used for PDCCH/PDSCH.

### (Problems)

As noted above, in this embodiment, as an SCS in a frequency band of 52.6 GHz to 71 GHz, a wider SCS (e.g., 480 kHz) than that of existing FR2 is used.

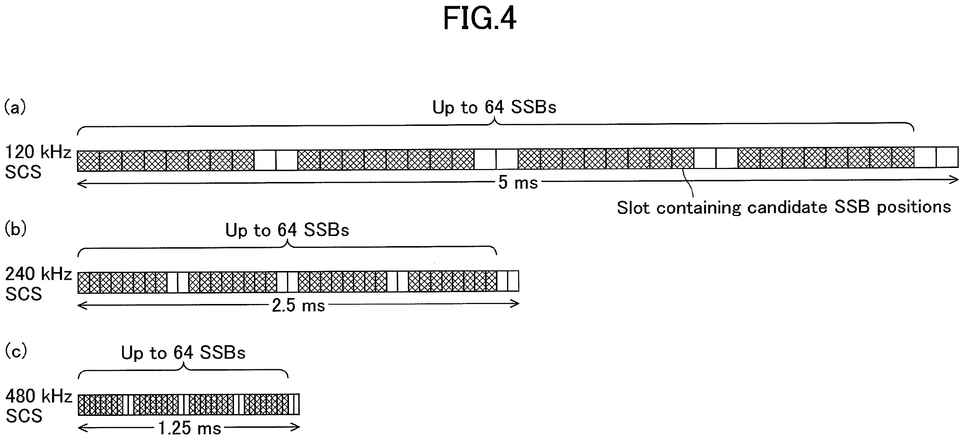

FIG. 4 is a diagram illustrating a problem when a wide SCS is used. Fig. 4(a) to Fig. 4(c) are diagrams in which up to 64 SSBs (64 SSBs with different indexes) are transmitted from the base station apparatus 10. In each diagram, a slot containing candidate symbols in which an SSB is placed is shown by shading.

Fig. 4(a) shows a case when SCS = 120 kHz. Fig. 4(b) shows the case when SCS = 240 kHz. As shown in Fig. 4(b), when SCS is 240 kHz, the symbol length and the slot length become 1/2 compared to the case shown in Fig. 4(a). Furthermore, as shown in Fig. 4(c), when SCS is 480 kHz, the symbol length and the slot length are reduced to 1/4 compared to the example shown in Fig. 4(a) . As described above, when SCS becomes wide, a plurality of SSBs are arranged in shorter time intervals, so that the user terminal 20 using parameters defined by the existing NR may not be able to properly measure SSB or the like. Such problems may also arise for other reference signals (such as CSI-RS).

Hereinafter, a technique for solving the above-described problem and for appropriately performing measurement will be described.

### (Measurement)

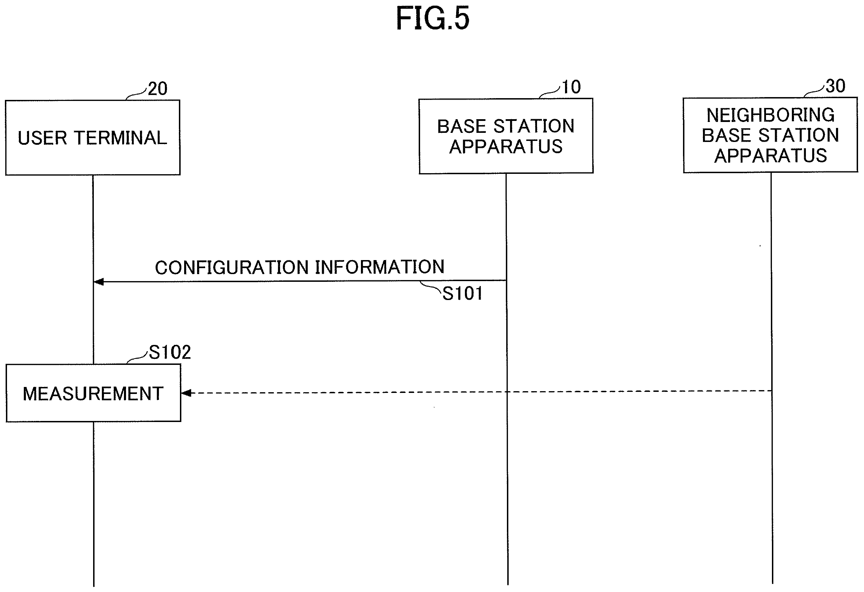

First, a basic example of the operation related to the measurement in the wireless communication system according to the present embodiment will be described with reference to Fig. 5.

In S101, the user terminal 20 receives configuration information from the base station apparatus 10. The configuration information is, for example, an RRC message containing parameters for measurement.

In S102, the user terminal 20 performs measurement based on the configuration information (parameters for measurement) received by S101. In the example of Fig. 5, the measurement is performed by receiving an SSB (or a CSI-RS) transmitted from a neighbor base station apparatus 30.

By performing the measurement, for example, the user terminal 20 can determine whether or not to handover to another cell. Further, when the user terminal 20 transmits a measurement result to the base station apparatus 10, the base station apparatus 10 can determine whether or not a CC is newly added when performing CA.

Fig. 5 shows an example of RRM measurement. In the RLM measurement, a signal (SSB, CSI-RS, or the like) transmitted from the base station apparatus 10 of the serving cell is measured.

In this embodiment, the user terminal 20 can perform both SSB-based measurement (measurement by receiving an SSB) and a CSI-RS-based measurement (measurement by receiving a CSI-RS).

As a measurement target, the user terminal 20 can measure any of the following: RSRP (reference signal received power), RSRQ (reference signal received quality), and SINR (signal-to-noise and interference ratio), which are described in detail in Non-Patent Document 3.

For example, the configuration information transmitted from the base station apparatus 10 to the user terminal 20 in S101 includes SMTC window duration and MeasGapConfig (measurement gap configuration) and the like. In Non-Patent Document 1, SMTC window duration is defined as duration of SSB-MTC.

The SMTC window above stands for SSB-based RRM Measurement Timing Configuration window. The user terminal 20 performs detection and measurement of an SSB within the SMTC window interval when an SMTC window including an SMTC window duration is configured by the base station apparatus 10.

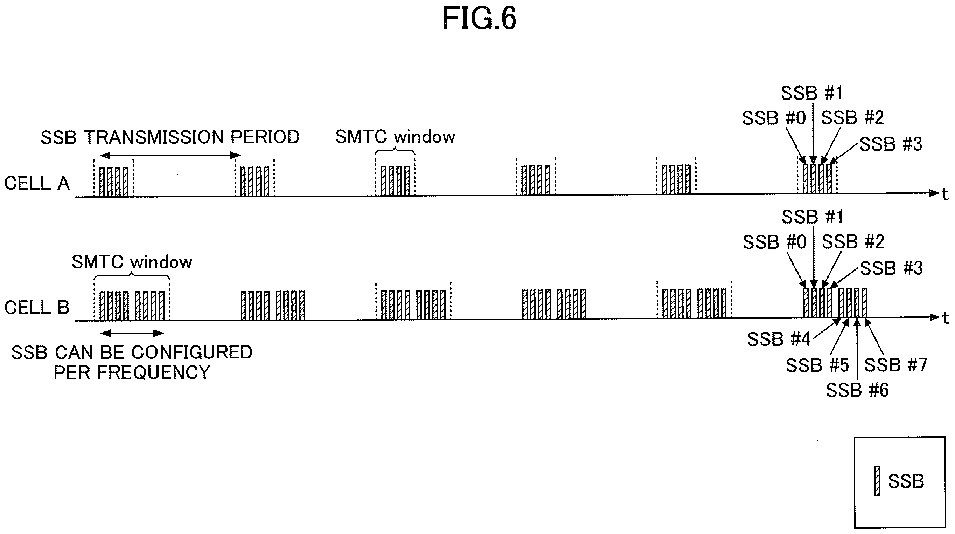

Referring to FIG. 6, the relationship between SSB and SMTC window is described. FIG. 6 shows that at cell A, SSBs are being transmitted at a certain transmission period, and at cell B, more SSBs than those of cell A are being transmitted at that transmission period. The period of the SMTC window can be configured, for example, in the range of 5, 10, 20, 40, 80, and 160 ms, as well as the SSB, but need not be the same as the transmission period of the SSB. In the example shown in Fig. 6, in cell A, the same transmission period as that of SSB is configured for SMTC window. On the other hand, in cell B, a transmission period (transmission period of low frequency) larger than that of SSB is configured for SMTC window.

In addition, for the SMTC window duration, according to the existing NR specification, one selected value from 1, 2, 3, 4, and 5 ms can be configured. In the example shown in Fig. 6, cell B with more SSBs has a longer SMTC window duration than cell A.

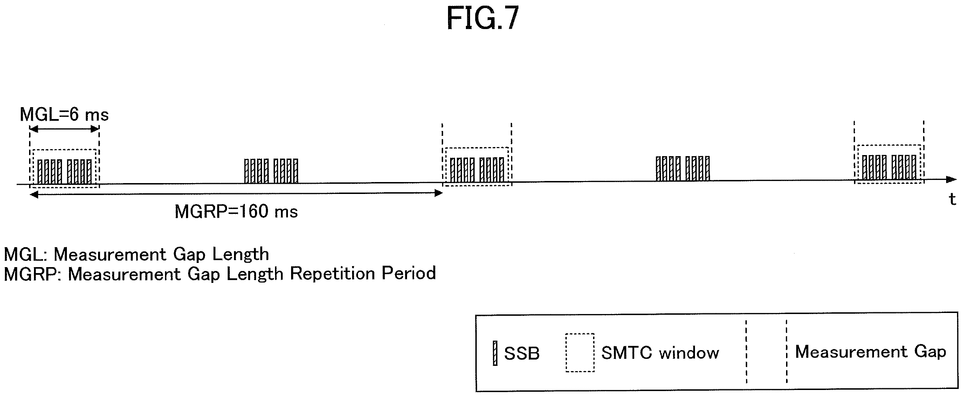

Fig. 7 shows an example in which a measurement gap for measuring different frequencies is configured to the user terminal 20. The user terminal 20 performs measurement in a time interval of the SMTC window and the measurement gap.

As noted above, when, for example, a 480 kHz SCS is used in a wireless communication system, symbol length and slot length will be shortened, and a total of 64 candidate SSB slot positions will be placed within a time interval of 1.25 ms, as shown in Fig. 4 (c) .

For example, in a cell to be measured, in a case where fewer than 64 SSBs (for example, 32 SSBs here) are placed in the first half of the 1.25 ms interval (0.5125 ms), even if the smallest SMTC window duration (1 ms) in the existing specification is configured to the user terminal 20, the user terminal 20 must wait for SSB, even though no SSB is transmitted in nearly half of the SMTC window duration (1 ms) . This reduces time resources for data transmission and reception and makes the use of resources inefficient.

Accordingly, according to the present embodiment, the base station apparatus 10 can configure a value (for example, 0.5 ms or 0.25 ms) of a time length shorter than 1 ms as the SMTC window duration to the user terminal 20. That is, the base station apparatus 10 can select a time length of less than 1 ms from a plurality of time length values. It may also be possible to configure a value (for example, 1.5 ms) that is longer than 1 ms and has a time granularity of 1 ms or less.

Regarding the measurement gap, as described in the existing NR specification (Non-Patent Documents 1 and 2), the base station apparatus 10 can configure, as a measurement gap, per-UE measurement gap (both FR1 and FR2 can be measured) that is a measurement gap for each user terminal, and a per-FR measurement gap (a measurement gap for measuring the frequency of FR1 and a measurement gap for measuring the frequency of FR2 can be individually configured) that is a measurement gap for each FR, for the user terminal 20.

In the existing NR specification, as a gap length of the per-UE measurement gap, 3, 4, or 6 ms can be configured, and as a repetition period, 20, 40, 80, or 160 ms can be configured.

According to the existing specification, as a gap length of the per-FR measurement gap for FR2, 1.5, 3.5, or 5.5 ms can be configured, and as a repetition periodicity, 20, 40, 80, or 160 ms can be configured.

In this embodiment, shorter gap lengths can be configured in consideration of FR3. The gap length will be described in detail in Examples 1-3, which will be described later.

Hereinafter, Examples 1, 2, and 3 will be described. Examples 1-3 may be implemented in any combination.

### (Example 1)

Example 1 is an example of a measurement gap and includes Examples 1-1 through 1-4. Examples 1-1 to 1-4 will be described below. Examples 1-1 to 1-4 may be implemented in any combination.

### <Example 1-1>

In Example 1-1, RF Returning Time (frequency switching time length of RF circuit) is shortened compared to the conventional RF Returning Time.

First, RF Returning Time will be explained. When the user terminal 20 is performing signal reception in a serving cell of a frequency, a measurement gap described above is used to perform measurement of a signal of a cell of different frequency. When the user terminal 20 switches a frequency used for reception to a different frequency, it is necessary to switch the frequency used in an RF circuit (radio unit) in the user terminal 20, and the time required for the switching is RF Retuning Time.

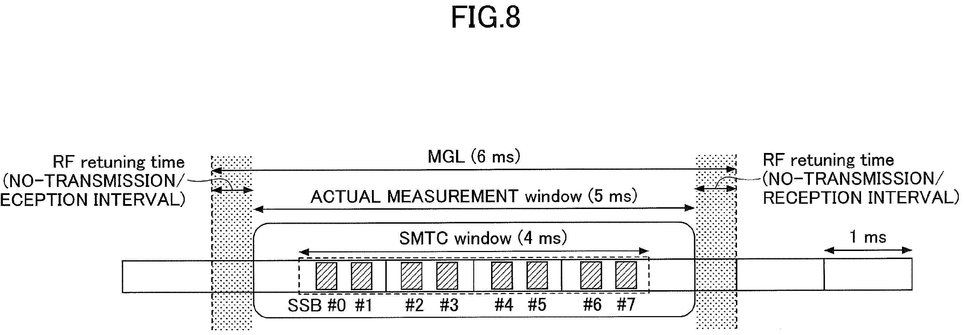

For example, as shown in Fig. 8, when a measurement gap length (MGL) is 6 ms and an RF Returning Time is 0.5 ms, the first 0.5 ms and the last 0.5 ms of the measurement gap length are RF Returning Time, and transmission and reception cannot be performed in the RF Retuning Time. Therefore, the length of time that can be used for actual measurement is 5 ms.

The RF Returning Time in LTE is 0.5 ms, and 0.5 ms is also used in NR FR1.

In FR1, when SCS = 15 kHz, the number of slots included in the RF Returning Time (0.5 ms) is 1, and when SCS = 30 kHz, the number of slots included in the RF Returning Time (0.5 ms) is 2, and data transmission reception and measurement cannot be performed at that time length.

In FR2, for example, if SCS = 120 kHz, the number of slots included in 0.5 ms is 8. That is, when the SCS = 120 kHz and the RF Returning Time of FR1 (0.5 ms) is applied, eight slots before and after the measurement gap are no longer available and the overhead is larger.

Therefore, the RF Returning Time of 0.25 ms, which is half of 0.5 ms, is introduced in FR2.

As described above, it is assumed that 240 kHz, 480 kHz, etc. will be used as SCS in FR3. If the same RF Returning Time =0.25ms as FR2 is used for FR3, the number of slots in the RF Returning Time (0.25 ms) is 4 when SCS = 240 kHz, and the number of slots in the RF Returning Time (0.25 ms) is 8 when SCS = 480 kHz, thus, the overhead is large.

Accordingly, in Example 1-1, a value shorter than the RF retuning time in FR2 is used as an RF retuning time of the user terminal 20 using FR3. For example, 0.125 ms, half of 0.25 ms, may be used as the RF Returning Time in FR3. Also, 0.0625 ms, one-fourth of 0.25, may be used as the RF Returning Time in FR3.

For example, suppose that the user terminal 20 switches a frequency of a received signal from frequency A to frequency B and performs a measurement, and returns the frequency B to frequency A. In this case, the user terminal 20 switches the reception frequency of the RF circuit from the frequency A to the frequency B by 0.125 ms and switches the reception frequency from the frequency B to the frequency A by 0.125 ms.

### <Examples 1-2>

Next, Example 1-2 will be described. Example 1-2 is an example of Measurement Gap Timing Advance (MGTA).

As described above, since a predetermined time interval before and after the measurement gap is used for frequency switching (RF retuning), the user terminal 20 cannot use the interval for measurement. In other words, when the RF Returning Time and the SSB of the measurement target overlap, SSB cannot be received.

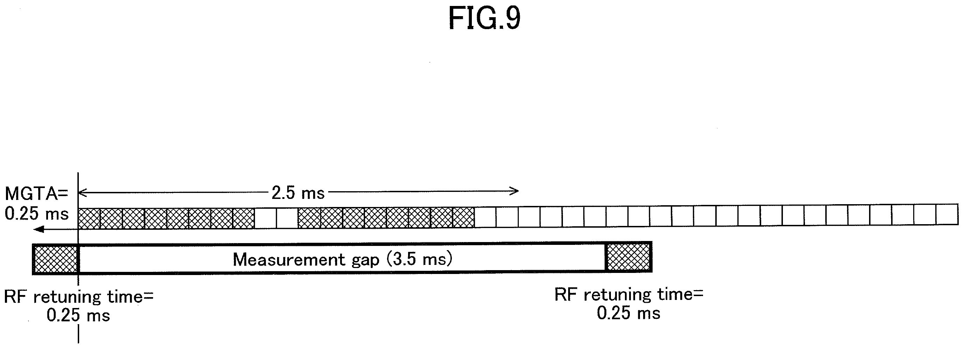

Therefore, as shown in Fig. 9, the user terminal 20 is provided with a function (Measurement gap timing advance) that enables the user terminal 20 to use SSB for measurement without leakage by shifting the start timing of the measurement gap forward.

Specifically, the base station apparatus 10 configures a time length of MGTA to the user terminal 20. Under existing specifications, the time length of MGTA is a value selected from 0 ms, 0.25 ms, and 0.5 ms. In the case of FR2, the value is selected from 0 ms and 0.25 ms.

As described above, in this embodiment, an RF Returning Time shorter than the RF Returning Time of FR2 is used in FR3. Accordingly, in Example 1-2, the base station apparatus 10 can configure an MGTA (MGTA < 0.25 ms) shorter than 0.25 ms (e.g., MGTA = 0.125 ms) for the user terminal 20.

Specifically, for example, the MGTA (MGTA < 0.25 ms) is added to 0 and 0.25 as a candidate of MGTA. For example, when SCS = 240 kHz, 480 kHz, or the like is used by the user terminal 20, the base station apparatus 10 configures MGTA = 0.125 ms to the user terminal 20.

Alternatively, when SCS=240 kHz, 480 kHz, or the like is used, the user terminal 20 may perform an operation to autonomously advance the start timing of the measurement gap by the amount of RF Returning Time (for example, 0.125 ms) for the configured measurement gap.

For example, when a measurement gap of "per FR3 gap" is configured, the user terminal 20 may always advance the start timing of the measurement gap by the amount of RF Returning Time, and in other cases, the user terminal 20 may use MGTA notified by RRC signaling.

### <Example 1-3>

Next, Example 1-3 will be described. A measurement gap is notified by the base station apparatus 10 to the user terminal 20 by MeasGapConfig (Non-patent Document 1) . By MeasGapConfig, the user terminal is notified of gapFR1 which applies only to FR1, gapFR2 which applies only to FR2 or gapUE which applies commonly to FR1 and FR2.

In this embodiment, gapFR3, which is a configuration applied only to FR3, may be notified, and gapUE may be a configuration commonly applied to FR1, FR2, and FR3.

The gapFR1, gapFR2, gapUE, and gapFR3 described above all include GapConfig, and GapConfig includes MGL, MGRP, MGTA, and the like.

MGL (Measurement Gap length) is a measurement gap length and MGRP (Measurement Gap Repetition Period) is a period of a measurement gap.

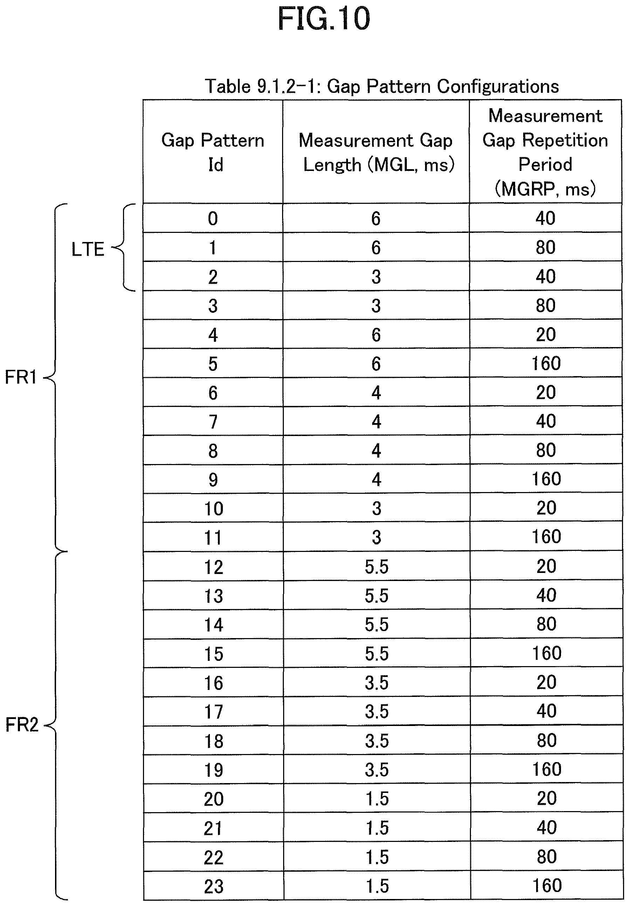

The combination of MGL and MGRP is called Gap Pattern Configuration. Existing Gap Pattern Configuration that should be supported by the user terminal 20 is disclosed in Non-Patent Document 2. Fig. 10 shows the Gap Pattern Configuration disclosed in Non-Patent Document 2. In FIG. 10, for example, "FR2" indicates that the user terminal 20 applies a Gap Pattern Configuration of any of Gap Patten ID = 12-23 to a cell (which may also be referred to as a CC (component carrier)) of a frequency of FR2 to be measured.

In the Gap Pattern Configuration, the MGL is determined by "RF Returning Time × 2 + actual measurement time length". For example, in FR1, if RF Retuning Time = 0.5 ms and the actual length of measurement time = 3 ms, then MGL = 4 ms.

As described above, when the user terminal 20 uses a cell of FR3, the user terminal 20 may use an RF Retuning Time that is shorter than a conventional RF Returning Time. In addition, the actual required measurement time can be reduced depending on the number of SSBs and SCS.

In view of the above, in Example 1-3, a shorter MGL than the MGL specified in the existing Gap Pattern Configuration is introduced.

For example, an MGL calculated by "(RF Returning Time for FR3 × 2) + (actual measurement time length)" is introduced. The "actual measurement time length" is, for example, a time width of SMTC. As an example, when RF Returning Time = 0. 125 ms, MGL calculated as "0.125 ms × 2 + actual measurement time length" is introduced. For example, if the actual measurement time is 1 ms, MGL = 0.125 ms × 2 + 1 ms = 1.25 ms.

As described above, when an MGL shorter than an existing MGL (for example, 1.25 ms) is introduced, for example, the base station apparatus 10 uses mgl of GapConfig to notify the user terminal 20 using FR3 of 1.25 ms as a value selected from "1.25 ms, 1.5 ms, 3.5 ms, and 5.5 ms."

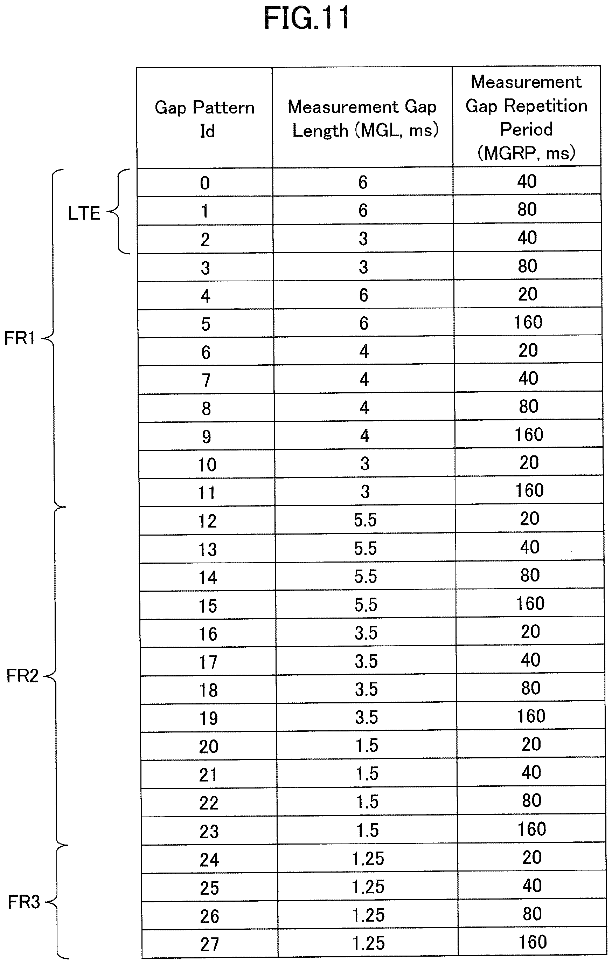

Gap Pattern Configuration for FR3 may be added as Gap Pattern Configuration to be supported by the user terminal 20 supporting FR3, for example, as shown in Fig. 11. Fig. 11 is an example.

### <Example 1-4>

Next, Example 1-4 will be described. It is specified in Non-Patent Document 2, Section 9.1.2. that, due to a measurement gap configured in a serving cell, interruption of communication in another serving cell occurs (use (transmission and reception) becomes unavailable due to a measurement gap).

For example, in a case where the user terminal 20 performs CA (carrier aggregation) or DC (dual connectivity) using multiple cells by configuration from the base station apparatus 10, a measurement gap (per UE, per FR1, per FR2, or per FR3) is configured by an RRC message of a single serving cell based on the timing of the single serving cell (e.g., PCell). At that time, the number of slots to be interrupted as defined in Section 9.1.2 of Non-Patent Document 2 is applied to another serving cell that comprise CA or DC, and transmission and reception cannot be performed during the time length of the number of slots.

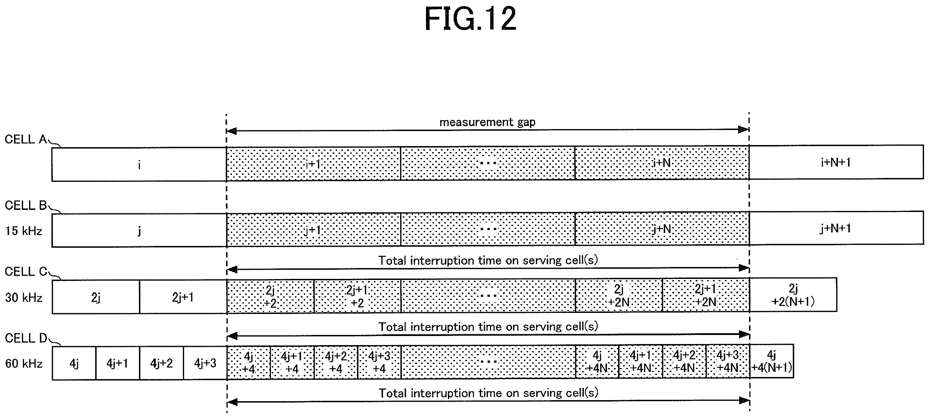

Fig. 12 shows, for example, the case where the user terminal 20 executes a CA/DC (CA or DC) using cells A-D in FR1, and a measurement gap of per FR1 is configured by an RRC message of cell A (e.g., PCell) . FIG. 12 shows the case where cells A-D are synchronized (the slot boundaries are the same).

In this case, the slot in cells B-D overlapping the measurement gap in cell A becomes the slot to be interrupted in cells B-D.

In the example shown in Fig. 12, SCS of Cell A is 15 kHz and SCS of Cell B through D is 15 kHz, 30 kHz, and 60 kHz, respectively. As shown in Fig. 12, per one slot of Cell A (SCS=15 kHz), the time length of one slot is interrupted in Cell B (SCS=15 kHz), the time length of two slots is interrupted in Cell C (SCS=30 kHz), and the time length of four slots is interrupted in Cell D (SCS=15 kHz) . That is, the number of slots that are interrupted increases in proportion to SCS.

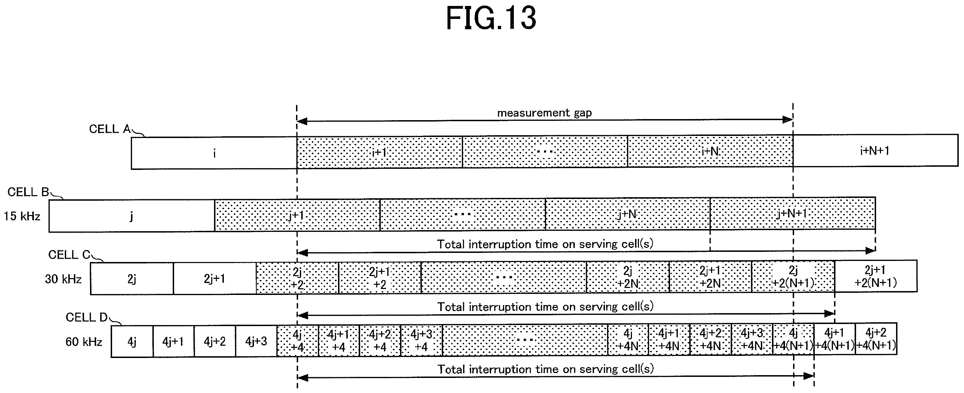

FIG. 13 shows the case where cells A-D are not synchronized (when slot boundaries are not matched) . In this case, a slot in cells B-D having time overlapping with the measurement gap in cell A becomes a slot to be interrupted in cells B-D.

For example, slot j+1 of cell B overlaps with a time of a portion of slot j+1 of cell A. In this case, the whole slot j+1 in cell B is a slot that is interrupted. The same applies to the last slot. Therefore, compared to the case of FIG. 12, in the case of FIG. 13, slots the number of which is greater than that shown in Fig. 12 by one are slots where interruption occurs in cells B to D.

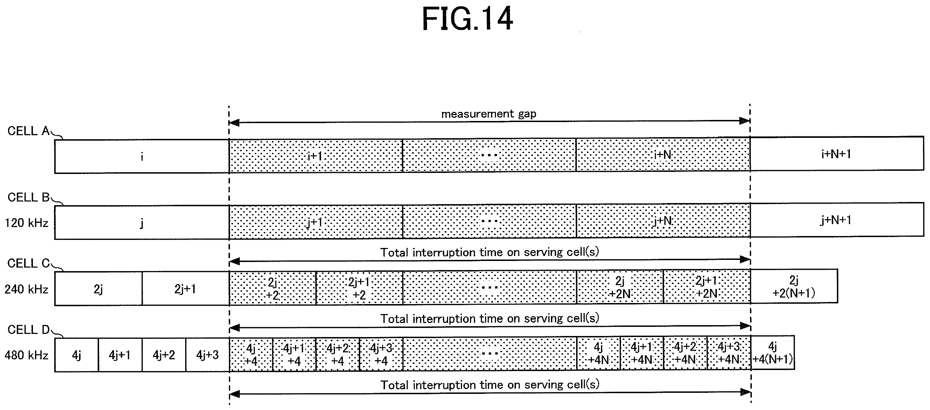

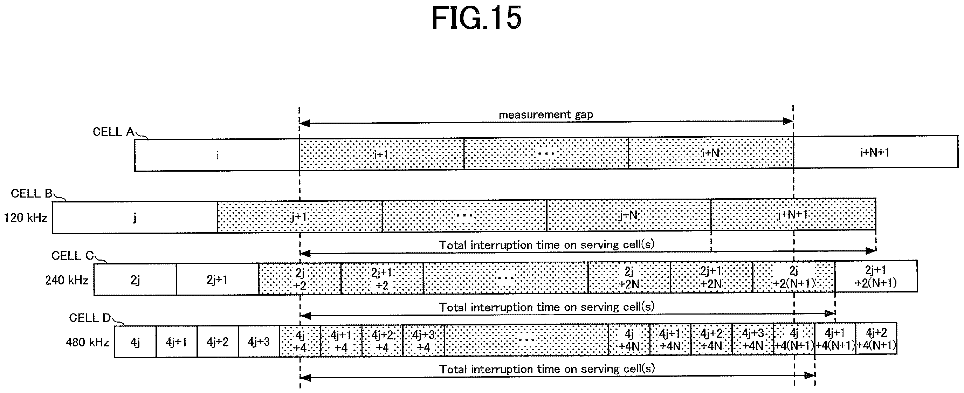

In Example 1-4, interruption as shown in Figs. 12 and 13 is similarly applied to FR3. For example, as shown in Figs. 14 and 15, in the case where CA or DC of cell A (SCS = 120 kHz), cell B (SCS = 120 kHz), cell C (SCS = 240 kHz), and cell D (SCS = 480 kHz) is performed in FR3, slots shown in the figure in cells B to D other than cell A for which the measurement gap is configured are interrupted as in Figs. 12 and 13.

In the example of Figs. 14 and 15, for example, if cell B is FR2, cell A, cell C, and cell D are FR3, and per FR3 Gap is configured by RRC of cell A, the serving cell of FR2 has no effect by Gap, and can continue communication, and only the serving cell (CC) of FR3 has effect of interruption. Likewise, any FR1 serving cell has no effect by the Gap. In other words, if per FR3 gap is configured, there is no effect on the serving cells of FR1 and FR2, and only CC in FR3 is affected.

The number of slots interrupted in other serving cells by a measurement gap configured in a serving cell is specified in Table 9.1.2-4, Table 9.1.2-4a, and Table 9.1.2-4b of section 9.1.2 in Non-Patent Document 2 as Total number of interrupted slots.

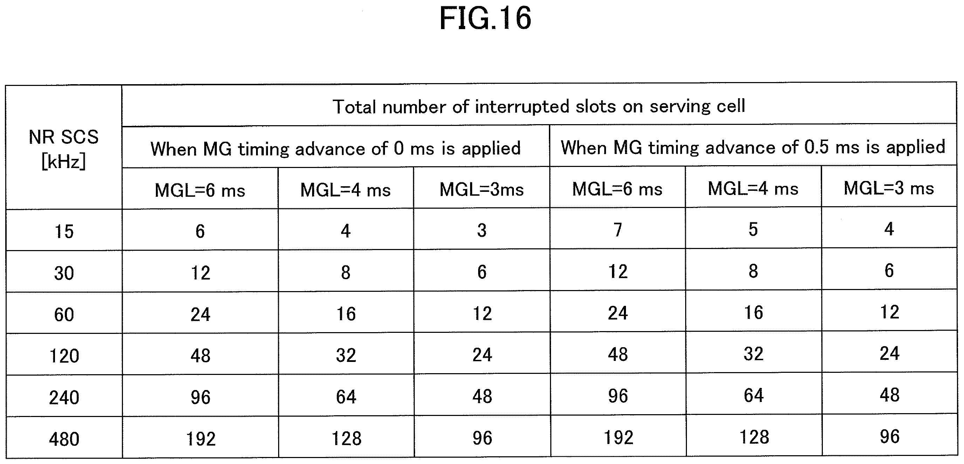

Existing provisions only specify up to 120 kHz for total number of interrupted slots. In Example 1-4, however, the total number of interrupted slots is specified also for 240 kHz and 480 kHz that are expected to be used in FR3, for example, as shown in Fig. 16.

As shown in Fig. 16, basically, a number proportional to SCS becomes the Total number of interrupted slots . For example, when MGL=3 ms, for SCS={120 kHz, 240 kHz, 480 kHz}, the total number of interrupted slots is {24, 48, 96}. Fig. 16 shows the case of synchronization (the slot boundaries are matched), and in the case of asynchronous (the slot boundaries are not matached), 1 may be added to each slot number. In the above example, the total number of interrupted slots becomes {25,49,97}. Depending on the MGTA value, 1 may be added to the total number of interrupted slots.

Regarding the operation of the user terminal 20, for example, it is assumed that DC of the cell A and the cell D shown in Fig. 15 is configured to the user terminal 20. In this case, when a measurement gap (MGL = 3 ms as an example) shown in Fig. 15 is configured by RRC of cell A to the user terminal 20, the user terminal 20 determines that 97 slots from slot 4j + 4 in cell D located at the start timing of the measurement gap are interrupted slots and does not perform transmission or reception in cell D in the interrupted slots.

According to Example 1 described with reference to Examples 1-1 to 1-4, the user terminal 20 can appropriately perform measurement in FR3.

### (Example 2)

Next, Example 2 will be described. Example 2 may be implemented in combination with Example 1, or in combination with Example 3, or in combination with both Example 1 and Example 3. The user terminal 20 can perform reception beamforming in measurements by receiving SSB or CSI-RS. More specifically, the user terminal 20 can perform Rx beam sweeping to change directions of reception beams on a time-by-time basis, since signals may be transmitted from various directions with transmission beams.

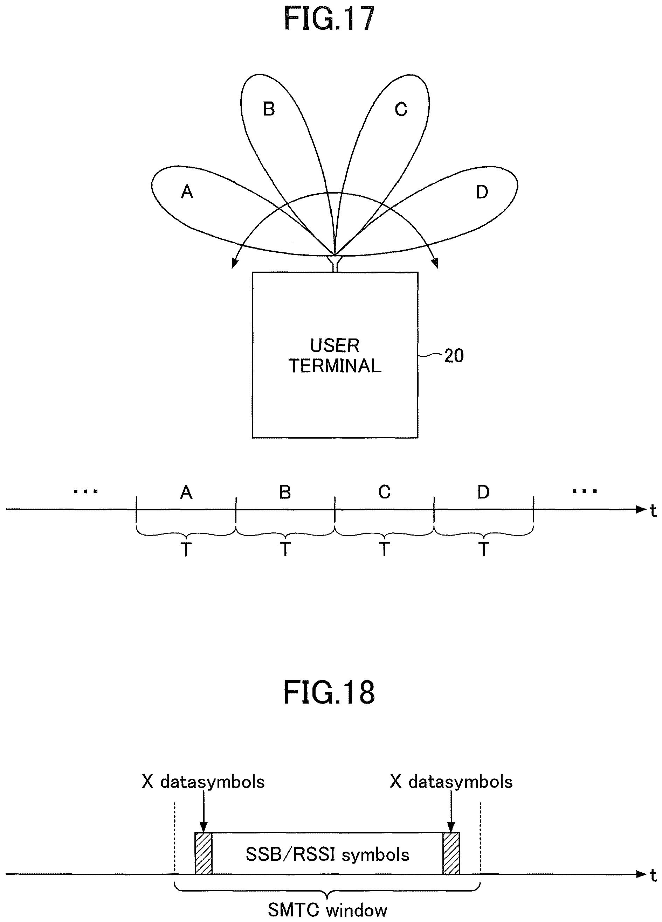

Fig. 17 shows an example of Rx beam sweeping using four reception beams. In Fig. 17, the time length T is the time length for performing measurement with one reception beam (one reception beam includes a case in which a reception beam is not formed). For example, in this time length T, measurement of the serving cell (presence or absence of link quality deterioration and the like) and the measurement of neighbor cells (candidate beam detection, etc.) are performed by measurement with the one reception beam.

In the example of Fig. 17, the user terminal 20 performs measurement during the time length T represented by "A" by the reception beam A, performs measurement during the time length T represented by "B" by the reception beam B, performs measurement during the time length T represented by "C" by the reception beam C, and performs measurement during the time length T represented by "D" by the reception beam D. The measurement time length of each reception beam may be different with each other.

A single measurement period (which may be referred to as an Evaluation period) using multiple reception beams is N times the measurement period T for a single reception beam (including a case where no reception beam is formed), and N is referred to as a scaling factor. Non-patent Document 2 discloses that N=1 or N=8 for FR2. The measurement period, for example, occurs periodically, and the user terminal 20 can perform measurement by reception beam sweeping for each measurement period.

In Example 2, the user terminal 20 may use a value greater than 8 as N in measurement of FR3 frequency bands. For example, N may be any value of 9, 10, 11, 12, 13, 14, 15, and 16. That is, the user terminal 20 can switch reception beams eight or more times during a single measurement period. For example, the user terminal 20 may perform switching of reception beams eight times, nine times, or ten times or more during a single measurement period. For example, if N = 10, the user terminal 20 can perform measurement using 10 reception beams during a measurement period of T x 10.

In measurement of frequency bands of FR3, the user terminal 20 may use N larger than 8 when performing measurement (e.g., L3 RSRP) of a cell (which may be referred to as adjacent cell or neighbor cells) other than the serving cell, and may use N equal to or smaller than 8 when performing measurements (e.g., RLM, L1-RSRP, etc.) in the serving cell (which may be referred to as own cell or residing cell) . That is, in measurement of frequency bands of FR3, the user terminal 20 can perform switching of reception beams eight times or more during one measurement period when measuring a cell other than the serving cell, and can perform switching of reception beams less than eight times during one measurement period when measuring the serving cell.

By assuming 8 or more times of reption beam sweeping when measuring a cell other than the serving cell, the possibility of accurately identifying neighboring same-frequency cells and different-frequency cells becomes high. Also, in the measurement of the serving cell, by less than 8 times of reception beam sweeping, too long measurement period can be avoided.

### <In a case where measurement timings overlap>

Timing of measurement in frequency bands of FR2 and timing of measurement in frequency bands of FR3 may overlap. For example, there are cases in which, SMTC for measurement in frequency bands of FR2 and SMTC for measurement in frequency band of FR3 overlap in time length and period, RLM-RS for measurement in frequency bands of FR2 and RLM-RS for measurement in frequency bands of FR3 overlap in time resources, etc.

In this case, if the user terminal 20 uses a common reception beam for FR2 and FR3, measurement time of Rx beam sweeping may be shared between FR2 and FR3. For example, in the case of N=4 shown in Fig. 17, it is assumed that reception beams A to D are common to FR2 and FR3. That is, each of the reception beams A-D can be used by only one of FR2 and FR3.

In this case, for example, one time in two times may be used for measurement of FR2 and the other time in the two times may be used for measurement of FR3. For example, the user terminal 20 may use an odd number (i.e., first and third) (reception beams A and C in Fig. 17) for FR2 and use an even number (i.e., second and fourth)(reception beams B and D in Fig. 17) for FR3. Which beam to use for FR2 or FR3 may be pre-defined, or may be notified from the base station apparatus 10 to the user terminal 20 as a pattern.

A ratio may be notified as a pattern to be notified. For example, when a ratio "1/3" meaning "the number of FR2 measurements: the number of FR3 measurements" is notified from the base station apparatus 10 to the user terminal 20 by RRC signaling, the user terminal 20 performs FR2 measurements (1/3)×N times out of N times, and performs FR3 measurements (2/3)×N times.

If the user terminal 20 can use separate reception beams for FR2 and FR3, the user terminal 20 can perform simultaneous measurement of FR2 and FR3. For example, when N=4 for FR2 and N=10 for FR3 are used, the user terminal 20 can perform a measurement using four reception beams in FR2 and perform a measurement using 10 reception beams in FR3. In these measurements, the timing of the measurement for FR2 and FR3 may overlap.

For example, when the user terminal 20 transmits to the base station apparatus 10 capability information indicating that common reception beams are used for FR2 and FR3, the above-described pattern may be notified from the base station apparatus 10 to the user terminal 20, and when the user terminal 20 transmits to the base station apparatus 10 capability information indicating that separate reception beams are used for FR2 and FR3, the above-described pattern may not be notified from the base station apparatus 10 to the user terminal 20.

According to Example 2, the user terminal 20 can appropriately perform measurements in FR3.

### (Example 3)

Next, Example 3 will be described. Example 3 may be implemented in combination with Example 1, or in combination with Example 2, or in combination with both Example 1 and Example 2. As described in Non-Patent Document 2, FR2 has restrictions on simultaneous transmission and reception of SSB/CSI-RS to be measured and data. Similar limitations may be provided for FR3.

For example, the user terminal 20 operating in accordance with existing provisions may not be required, in SMTC window, to transmit PUCCH/PUSCH/SRS and to receive PDCCH/PDCH/TRS/CSI-RS for CQI, at an SSB symbol to be measured, an RSSI measurement symbol, and one data symbol before and after successive SSB symbols/RSSI measurement symbols.

The "one data symbol" in the above-mentioned period during which transmission and reception are not required is based on Rx beam switching and signal propagation time from neighbor cells.

That is, for example, PUSCH for transmission during the above-described period in which transmission and reception are not required is not scheduled for the user terminal 20 from the base station apparatus 10. Also, for example, PDSCH for reception during the above-described period in which transmission and reception are not required is not scheduled for the user terminal 20 from the base station apparatus 10.

However, in this embodiment in which the high frequency band of FR3 is assumed to be used, as described above, since a wide SCS such as 480 kHz is used, a time length per symbol becomes short. Therefore, only by adding "one data symbol" before and after SSB symbols/RSSI measurement symbols as the period during which transmission and reception are unnecessary, the time length of the period during which transmission and reception are unnecessary may be insufficient.

Thus, in Example 3, in a case where FR3 is used, when SCS greater than or equal to a certain SCS (e.g., 240 kHz) is used in both of SSB and "PDCCH/PDSCH", or in one of SSB and PDCCH/PDCH, the user terminal 20 may, in SMTC window, not transmit PUCCH/PUSCH/SRS and not receive PDCCH/PDSCH/TRS/CSI-RS for CQI, at SSB symbol to be measured, RSSI measurement symbol to be measured, and X data symbols before and after successive SSB symbols/RSSI measurement symbols. The TRS may be referred to as CSI-RS for tracking.

X above is an integer of 2 or more. For example, when SCS of SSB = 480 kHz and SCS of PDCCH/PDSCH = 480 kHz, X = 2 may be used. In this case, X=3 or X=4 may be used. When X=2, it is possible to minimize the period during which data cannot be sent and received and avoid interfering with SSB measurement of neighbor cells by data transmission and reception.

Fig. 18 is a diagram for explaining the above-described operation. As shown in FIG. 18, the user terminal 20 may not transmit "PUCCH/PUSCH/SRS" (which may be collectively referred to as "data") and may not receive "PDCCH/PDSCH/TRS/ CSI-RS for CQI" (which may be collectively referred to as "data") in a time interval consisting of consecutive SSB symbols to be measured, or consecutive RSSI symbols to be measured, and respective X data symbols before and after the consecutive symbols.

In addition, when measurement is performed for RLM, BFD (Beam Failure Detection), CBD (Candidate Beam Detection), or L1-RSRP with regard to FR3, the user terminal 20 cannot send or receive data overlapping with SSB to be measured. Here, "data transmission and reception" is the same as described above, and includes " Transmit PUCCH/PUSCH/SRS or receive PDCCH/PDSCH/CSI-RS for tracking/CSI-RS for CSI".

Similarly to FR2, in FR3, an exception case (a case in which no restriction occurs) may be provided in accordance with TCI state configuration between RSes (reference signals) . For example, if DMRS for PDCCH/PDSCH has QCL-type D relationship with CSI-RS for L1-RSRP, it is assumed that these can be transmitted and received using the same Rx beam, where N in the CSI-RS measurement is set to 1 and no scheduling restriction is provided.

For example, if RLM-RS is CSI-RS and DMRS for PDCCH/PDSCH has QCL-type D relationship with CSI-RS, it may be assumed that these can be transmitted and received using the same Rx beam, where N in the CSI-RS measurement is set to 1 and no scheduling restriction is provided.

According to Example 3 described above, the user terminal 20 can appropriately perform measurement in FR3.

### (Apparatus configuration)

Next, a functional configuration example of the base station apparatus 10 and the user terminal 20 that perform the processing and operations described above will be described.

### <Base Station Apparatus 10>

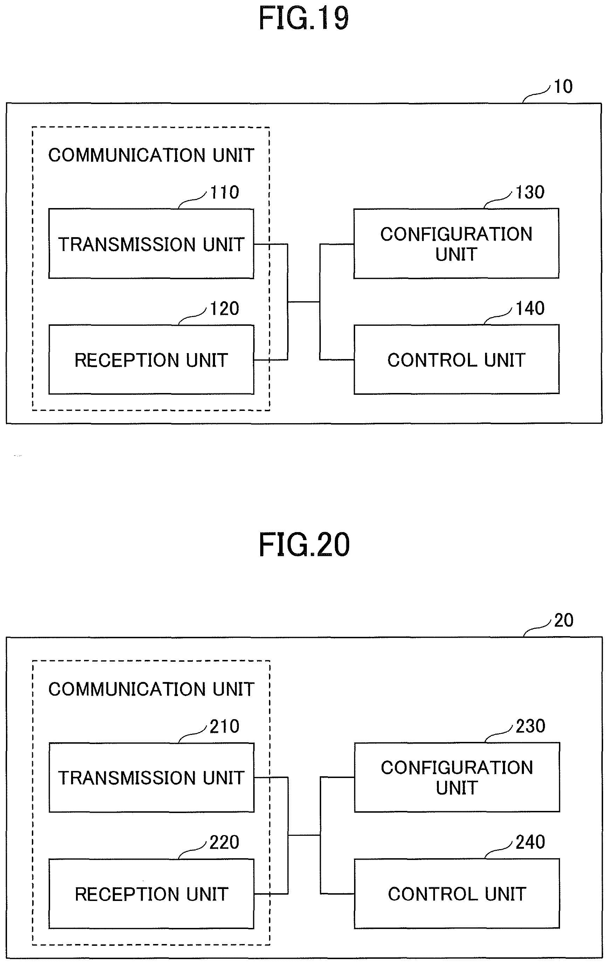

Fig. 19 is a diagram illustrating an example of a functional configuration of the base station apparatus 10. As shown in Fig. 19, the base station apparatus 10 includes a transmission unit 110, a reception unit 120, a configuration unit 130, and a control unit 140. The functional configuration shown in FIG. 19 is only one example. As long as the operation according to the embodiments of the present invention can be performed, the functional category and the name of the functional unit may be any one. The transmission unit 110 and the reception unit 120 may be collectively referred to as a communication unit.

The transmission unit 110 includes a function for generating a signal to be transmitted to the user terminal 20 side and transmitting the signal wirelessly. The reception unit 120 includes a function for receiving various signals transmitted from the user terminal 20 and acquiring, for example, information of a higher layer from the received signals. The transmission unit 110 has a function to transmit NR-PSS, NR-SSS, NR-PBCH, and DL/UL control signals, DCI by PDCCH, data by PDSCH, and the like to the user terminal 20.

The configuration unit 130 stores pre-configured configuration information and various configuration information to be transmitted to the user terminal 20 in the storage device provided by the configuration unit 130 and reads the pre-configured configuration information from the storage device as necessary.

The control unit 140 schedules the DL reception or UL transmission of the user terminal 20 through the transmission unit 110. The control unit 140 includes a function for performing an LBT. A function unit related to signal transmission in the control unit 140 may be included in the transmission unit 110, and a function unit related to signal reception in the control unit 140 may be included in the reception unit 120. The transmission unit 110 may be called a transmitter, and the reception unit 120 may be called a receiver.

### <User terminal 20>

Fig. 20 is a diagram illustrating an example of the functional configuration of the user terminal 20. As shown in Fig. 20, the user terminal 20 includes a transmission unit 210, a reception unit 220, a configuration unit 230, and a control unit 240. The functional configuration shown in FIG. 20 is only one example. A long as the operation according to the embodiments of the present invention can be performed, the functional category and the name of the functional unit may be any one. The transmission unit 210 and the reception unit 220 may be collectively referred to as a communication unit. The user terminal 20 may be referred to as a terminal.

The transmission unit 210 creates a transmission signal from the transmission data and wirelessly transmits the transmission signal. The reception unit 220 receives various signals wirelessly and acquires signals from higher layers from the received signal of the physical layer. The reception unit 220 has a function to receive the NR-PSS, NR-SSS, NR-PBCH, and DL/UL/SL control signals transmitted from the base station apparatus 10, DCI by PDCCH, data by PDSCH, and the like. For example, the transmission unit 210 may transmit PSCCH (Physical Sidelink Control Channel), PSSCH (Physical Sidelink Shared Channel), PSDCH (Physical Sidelink Discovery Channel), PSBCH (Physical Sidelink Broadcast Channel), etc. to another user terminal 20 as D2D communication, and the reception unit 120 may receive PSCCH, PSSCCH, PSDCH, PSDCH, or PSBCH, etc. from another user terminal 20. Further, the reception unit 220 can perform reception beam sweeping.

The configuration unit 230 stores various configuration information received from the base station apparatus 10 or other user terminals by the receiving unit 220 in a storage device provided by the configuration unit 230 and reads it from the storage device as necessary. The configuration unit 230 also stores the pre-configured configuration information.

The control unit 240 performs control of the user terminal 20. The control unit 240 performs the measurement described in Examples 1 to 3. The control unit 240 also retains the scaling factor. The reception unit 220 may perform the measurement described in Examples 1 to 3. A function unit related to signal transmission in the control unit 240 may be included in the transmission unit 210, and a function unit related to signal reception in the control unit 240 may be included in the reception unit 220. The transmission unit 210 may be referred to as a transmitter, and the reception unit 220 may be referred to as a receiver.

### [Summary]

In accordance with the present embodiment, at least the following terminals shown as items 1-8 are provided.

### (Item 1)

A terminal including:
a reception unit configured to receive configuration information of a time length for advancing a measurement gap from a base station apparatus; and
a control unit configured to perform measurement,
wherein the configuration information includes, as the time length for advancing the measurement gap, a time length selected from a plurality of time lengths including a predetermined time length shorter than 0.25ms, and
wherein the control unit is configured to perform measurement in the measurement gap advanced by the time length included in the configuration information.

### (Item 2)

The terminal as described in item 1, wherein the predetermined time length is a time length for switching frequencies in the terminal.

### (Item 3)

A terminal including:
a reception unit configured to receive configuration information of a measurement gap from a base station apparatus; and
a control unit configured to perform measurement,
wherein the configuration information includes, as the time length of the measurement gap, a time length selected from a plurality of time lengths including a predetermined time length shorter than 1.5ms, and
wherein the control unit is configured to perform measurement in the measurement gap included in the configuration information.

### (Item 4)

The terminal as described in item 3,
wherein the predetermined time length includes a time length twice a time length shorter than 0.25ms for switching frequencies, and a time length for measurement.

### (Item 5)

The terminal as described in any one of items 1-4,
wherein the control unit performs reception beam switching equal to or greater than 8 times in one measurement period.

### (Item 6)

A terminal including:
a control unit configured to perform reception beam switching less than 8 times in one measurement period when performing measurement of a serving cell, and
perform reception beam switching equal to or greater than 8 times in one measurement period when performing measurement of a neighbor cell.

### (Item 7)

A terminal including:
a reception unit configured to perform reception beam sweeping; and
a control unit configured to store a scaling factor greater than 8,
wherein the reception unit is configured to perform reception beam sweeping using reception beams the number of which is a value of the scaling factor during a time length obtained by multiply a predetermined time length by the scaling factor.

### (Item 8)

A terminal including:
a reception unit configured to perform reception beam sweeping; and
a control unit configured to store a plurality of scaling factors,
wherein the reception unit is configured to perform reception beam sweeping using a scaling factor equal to or less than 8 when performing measurement of a serving cell, and to perform reception beam sweeping using a scaling factor greater than 8 when performing measurement of a neighbor cell.

According to any of items 1-8, there is provided a technique that enables a user terminal to properly perform measurement in a high frequency band in a wireless communication system.

### (Hardware configuration)

The block diagrams (Fig. 19 and Fig. 20) used in the description of the embodiment described above illustrate the block of functional unit. Such function blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions transmission is referred to as the transmitting unit or the transmitter. As described above, the attainment method thereof is not particularly limited.

For example, the base station apparatus 10, the user terminal 20, and the like in one embodiment of this disclosure may function as a computer for performing the processing of a radio communication method of this disclosure. Fig. 22 is a diagram illustrating an example of a hardware configuration of the base station apparatus 10 and the user terminal 20 according to one embodiment of this disclosure. The base station apparatus 10 and the user terminal 20 described above may be physically configured as a computer apparatus including a processor 1001, a storage unit 1002, an auxiliary storage unit 1003, a communication unit 1004, an input unit 1005, an output unit 1006, a bus 1007, and the like.

Note that, in the following description, the word "apparatus" can be replaced with a circuit, a device, a unit, or the like. The hardware configuration of the base station apparatus 10 and the user terminal 20 may be configured to include one or a plurality of apparatuses illustrated in the drawings, or may be configured not to include a part of the apparatuses.

Each function of the base station apparatus 10 and the user terminal 20 is attained by reading predetermined software (a program) on hardware such as the processor 1001 and the storage unit 1002 such that the processor 1001 performs an operation, and by controlling the communication of the communication unit 1004 or by controlling at least one of reading and writing of data in the storage unit 1002 and the auxiliary storage unit 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage unit 1002 from at least one of the auxiliary storage unit 1003 and the communication unit 1004, and thus, executes various processings. A program for allowing a computer to execute at least a part of the operation described in the embodiment described above is used as the program. For example, the control unit 140 of the base station apparatus 10 illustrated in Fig. 19 may be attained by a control program that is stored in the storage unit 1002 and is operated by the processor 1001. In addition, for example, the control unit 240 of the user terminal 20 illustrated in Fig. 20 may be attained by a control program that is stored in the storage unit 1002 and is operated by the processor 1001. It has been described that the various processings described above are executed by one processor 1001, but the processings may be simultaneously or sequentially executed by two or more processors 1001. The processor 1001 may be mounted on one or more chips. Note that, the program may be transmitted from a network through an electric communication line.

The storage unit 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage unit 1002 may be referred to as a register, a cache, a main memory (a main storage unit), and the like. The storage unit 1002 is capable of retaining a program (a program code) that can be executed in order to implement a communication method according to one embodiment of this disclosure, a software module, and the like.

The auxiliary storage unit 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disk), a smart card, a flash memory (for example, a card, a stick, a key drive), a floppy (Registered Trademark) disk, a magnetic strip, and the like. The auxiliary storage unit 1003 may be referred to as an auxiliary storage unit. The storage medium described above, for example, may be a database including at least one of the storage unit 1002 and the auxiliary storage unit 1003, a server, and a suitable medium.

The communication unit 1004 is hardware for performing communication with respect to the computer through at least one of a wire network and a radio network (a transmitting and receiving device), and for example, is also referred to as a network device, a network controller, a network card, a communication module, and the like. The communication unit 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication unit 1004. In the transmitting and receiving unit, the transmitting unit and the receiving unit are mounted by being physically or logically separated.

The input unit 1005 is an input device for receiving input from the outside (for example, a keyboard, a mouse, a microphone, a switch, a button, a sensor, and the like) . The output unit 1006 is an output device for implementing output with respect to the outside (for example, a display, a speaker, an LED lamp, and the like) . Note that, the input unit 1005 and the output unit 1006 may be integrally configured (for example, a touch panel).

In addition, each of the apparatuses such as the processor 1001 and the storage unit 1002 may be connected by the bus 1007 for performing communication with respect to information. The bus 1007 may be configured by using a single bus, or may be configured by using buses different for each of the apparatuses.

In addition, the base station apparatus 10 and the user terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station apparatus 10 and the user terminal 20 have been described by using a functional block diagram, but such an apparatus may be attained by hardware, software, or a combination thereof. Each of software that is operated by a processor of the base station apparatus 10 according to the embodiment of the invention and software that is operated by a processor of the user terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), future radio access (FRA), new radio (NR), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station apparatus 10 may be performed by an upper node, in accordance with a case. In a network provided with one or a plurality of network nodes including the base station apparatus 10, it is obvious that various operations that are performed in order for communication with respect to the user terminal 20 can be performed by at least one of the base station apparatus 10 and network nodes other than the base station apparatus 10 (for example, MME, S-GW, or the like is considered as the network node, but the network node is not limited thereto). In the above description, a case is exemplified in which the number of network nodes other than the base station apparatus 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling) . In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding information. For example, a radio resource may be indicated by an index.

The names used in the parameters described above are not a limited name in any respect. Further, expressions or the like using such parameters may be different from those explicitly disclosed in this disclosure. Various channels (for example, PUSCH, PUCCH, PDCCH, and the like) and information elements can be identified by any suitable name, and thus, various names that are allocated to such various channels and information elements are not a limited name in any respect.

In this disclosure, the terms "base station (BS) ", "radio base station", "base station apparatus", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macrocell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication unit, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station apparatus in this disclosure may be replaced with the user terminal. For example, each aspect/embodiment of this disclosure may be applied to a configuration in which communication between the base station apparatus and the user terminal is replaced with communication in a plurality of user terminals 20 (for example, may be referred to as device-to-device (D2D), vehicle-to-everything (V2X), and the like). In this case, the function of the base station apparatus 10 described above may be provided in the user terminal 20. In addition, the words "uplink", "downlink", and the like may be replaced with words corresponding to the communication between the terminals (for example, "side") . For example, an uplink channel, a downlink channel, and the like may be replaced with a side channel.

Similarly, the user terminal in this disclosure may be replaced with the base station apparatus. In this case, the function of the user terminal described above may be provided in the base station apparatus.

The terms "determining" and "determining" used in this disclosure may involve diverse operations. "Determining" and "determining", for example, are capable of including "determining" and "determining" with respect to judging, calculating, computing, processing, deriving, investigating, looking up (search, inquiry) (for example, looking up in a table, a database, or another data structure), and ascertaining, and the like. In addition, "determining" and "determining" are capable of including "determining" and "determining" with respect to receiving (for example, receiving information), transmitting (for example, transmitting information), input, output, and accessing (for example, accessing data in a memory), and the like. In addition, "determining" and "determining" are capable of including "determining" and "determining" with respect to resolving, selecting, choosing, establishing, comparing, and the like. That is, "determining" and "determining" are capable of including "determining" and "determining" with respect to any operation. In addition, "determining (determining)" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical couple or connection, may be logical couple or connection, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot on the basis of a standard to be applied.

The description "on the basis of" that is used in this disclosure does not indicate "only on the basis of", unless otherwise specified. In other words, the description "on the basis of" indicates both "only on the basis of" and "at least on the basis of".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time unit greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time unit at the time of transmitting a signal. Other designations respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, unit representing TTI may be referred to as a slot, a mini slot, and the like, but not a subframe. Also, one slot may be called a unit time. The unit time may be different in each cell according to numerology.

Here, TTI, for example, indicates minimum time unit of scheduling in radio communication. For example, in an LTE system, the base station performs scheduling for allocating a radio resource (a frequency bandwidth, transmission power, and the like that can be used in each of the user terminals 20) in TTI unit, with respect to each of the terminals 20. Note that, the definition of TTI is not limited thereto.

TTI may be transmission time unit of a data packet (a transport block), a code block, a codeword, and the like that are subjected to channel coding, or may be processing unit of scheduling, link adaptation, and the like. Note that, when TTI is applied, a time zone in which the transport block, the code block, the codeword, and the like are actually mapped (for example, the number of symbols) may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a common TTI (TTI in LTE Rel.8-12), a normal TTI, a long TTI, a common subframe, a normal subframe, a long subframe, a slot, and the like. TTI shorter than the common TTI may be referred to as a shortened TTI, a short TTI, a partial TTI (or a fractional TTI), a shortened subframe, a short subframe, a mini slot, a subslot, a slot, and the like.

Note that, the long TTI (for example, the common TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined on the basis of the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a sub-carrier group (SCG), a resource element group (REG), a PRB pair, a RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In UE, one or a plurality of BWPs may be configured within one carrier.

At least one of the configured BWPs may be active, and it may not assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are in the plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and changed modes without departing from the spirit and scope of this disclosure defined by the description of the claims. Therefore, the description in this disclosure is for illustrative purposes and does not have any limiting meaning with respect to this disclosure.

### EXPLANATIONS OF LETTERS OR NUMERALS

- 10: BASE STATION APPARATUS
- 110: TRANSMISSION UNIT
- 120: RECEPTION UNIT
- 130: CONFIGURATION UNIT
- 140: CONTROL UNIT
- 20: USER TERMINAL
- 210: TRANSMISSION UNIT
- 220: RECEPTION UNIT
- 230: CONFIGURATION UNIT
- 240: CONTROL UNIT
- 1001: PROCESSOR
- 1002: STORAGE UNIT
- 1003: AUXILIARY STORAGE UNIT
- 1004: COMMUNICATION UNIT
- 1005: INPUT UNIT
- 1006: OUTPUT UNIT

## Claims

1. A terminal comprising:
a reception unit configured to receive configuration information of a time length for advancing a measurement gap from a base station apparatus; and
a control unit configured to perform measurement,
wherein the configuration information includes, as the time length for advancing the measurement gap, a time length selected from a plurality of time lengths including a predetermined time length shorter than 0.25ms, and
wherein the control unit is configured to perform measurement in the measurement gap advanced by the time length included in the configuration information.

2. The terminal as claimed in claim 1, wherein the predetermined time length is a time length for switching frequencies in the terminal.

3. A terminal comprising:
a reception unit configured to receive configuration information of a measurement gap from a base station apparatus; and
a control unit configured to perform measurement,
wherein the configuration information includes, as the time length of the measurement gap, a time length selected from a plurality of time lengths including a predetermined time length shorter than 1.5ms, and
wherein the control unit is configured to perform measurement in the measurement gap of the time length included in the configuration information.

4. The terminal as claimed in claim 3,
wherein the predetermined time length includes a time length twice a time length shorter than 0.25ms for switching frequencies, and a time length for measurement.

5. The terminal as claimed in any one of claims 1-4,
wherein the control unit performs reception beam switching equal to or greater than 8 times in one measurement period.

6. A terminal comprising:
a control unit configured to perform reception beam switching less than 8 times in one measurement period when performing measurement of a serving cell, and
perform reception beam switching equal to or greater than 8 times in one measurement period when performing measurement of a neighbor cell.
